# FASCICULE DE BREVET EUROPEEN

(11) **EP 4 128 278 B1**
(45) Date de publication et mention de la délivrance du brevet: **06.03.2024**
(21) Numéro de dépôt: 21715896.3
(22) Date de dépôt: 01.04.2021
(51) Int. Cl.: G21C 7/12, G21C 17/10, G21D 3/04

(54) **ENSEMBLE DE CONTRÔLE DE LA DÉSOLIDARISATION ENTRE UNE GRAPPE DE CONTRÔLE ET UNE TIGE DE COMMANDE D'UN DISPOSITIF DE CONTRÔLE DE LA RÉACTIVITÉ D'UN RÉACTEUR NUCLÉAIRE**
ANORDNUNG ZUR STEUERUNG DES AUSRÜCKENS ZWISCHEN EINEM STEUERCLUSTER UND EINER TREIBSTANGE EINER VORRICHTUNG ZUR STEUERUNG DER REAKTIVITÄT EINES KERNREAKTORS
ASSEMBLY FOR CONTROLLING DISENGAGEMENT BETWEEN A CONTROL CLUSTER AND A DRIVE ROD OF A DEVICE FOR CONTROLLING THE REACTIVITY OF A NUCLEAR REACTOR

(30) Priorité: 02.04.2020 FR 2003287
(43) Date de publication de la demande: 08.02.2023
(73) Titulaire: Société Technique pour l'Energie Atomique, 91190 Villiers Le Bacle (FR)
(72) Inventeur: BRUN, Michel, 13109 Simiane-Collongue (FR); DONNIER, François, 84120 Pertuis (FR)
(74) Mandataire: Lavoix
(86) Numéro de dépôt international: PCT/EP2021/058610
(87) Numéro de publication internationale: WO 2021/198417

(56) Documents cités:
- FR-A1- 2 746 538
- FR-A1- 2 869 447

## Description

La présente invention concerne selon un premier aspect un ensemble de contrôle destiné au contrôle de la désolidarisation entre une grappe de commande et une tige de commande d'un dispositif de contrôle de la réactivité d'un réacteur nucléaire.

Plus particulièrement, l'invention concerne un tel ensemble pour un réacteur à eau sous pression.

Les réacteurs nucléaires à eau sous pression (REP ou en anglais PWR ou « Pressurized Water Reactor ») comprennent un coeur comportant une pluralité d'éléments de combustible nucléaire juxtaposés dans une cuve du réacteur.

Un tel élément de combustible nucléaire comprend un faisceau de crayons de combustible insérés dans une structure porteuse comportant des tubes-guides.

Outre le fait que les tubes-guides permettent d'assurer une bonne rigidité de la structure porteuse, ils permettent également l'insertion, au sein des éléments de combustible nucléaire, de crayons absorbant les neutrons générés par la réaction nucléaire en chaîne dans le coeur du réacteur. Les crayons absorbants sont utilisés pour le contrôle de la réactivité du coeur du réacteur.

Les crayons absorbants sont reliés entre eux par groupes et forment des grappes de contrôle mobiles selon la direction axiale, encore appelées grappes de commande ou grappes de réglage. Par l'intermédiaire de tiges de commande et de mécanismes de commande des grappes du réacteur, les grappes sont déplacées selon la direction axiale pour enfoncer plus ou moins les crayons absorbants dans les éléments combustibles de façon à réguler la réactivité du réacteur nucléaire.

Ainsi, les grappes de contrôle sont relevées pour augmenter la réactivité du coeur du réacteur. A l'inverse, elles sont enfoncées dans les éléments combustibles pour diminuer la réactivité du coeur du réacteur.

En cas d'incident, les grappes de contrôle sont lâchées et tombent rapidement par gravité dans les éléments combustibles pour arrêter la réaction nucléaire.

Lors des opérations de maintenance du réacteur, notamment lors des opérations de remplacement de combustible, il est nécessaire de retirer les équipements internes supérieurs de la cuve du réacteur, c'est-à-dire l'ensemble des équipements servant au support et au guidage des grappes de contrôle et de l'instrumentation.

Pour ce faire, les tiges de commande sont désolidarisées des grappes de contrôle puis sorties par le haut de la cuve du réacteur.

Une mauvaise déconnexion entre la tige de commande et la grappe de contrôle peut entrainer une remontée accidentelle de la grappe de contrôle.

Ceci a de lourdes conséquences car en l'absence de suffisamment de crayons absorbants dans le coeur du réacteur, la réaction en chaine dans le coeur du réacteur est relancée.

De plus, un élément combustible peut lui-même s'accrocher à un équipement interne supérieur et être extrait du coeur entrainant des problèmes importants de radioprotection.

Dans les réalisations existantes, le dispositif de contrôle de la réactivité ne permet pas de s'assurer de la désolidarisation effective entre la tige de commande et la grappe de contrôle, ni de s'assurer du non-emport d'un élément combustible qui resterait accroché aux internes supérieurs. Ces contrôles sont réalisés en visuel par l'opérateur. Or, le nombre important d'équipements internes supérieurs dans le réacteur rend la vérification visuelle de cette désolidarisation difficile pour un opérateur.

FR2746538 A1 divulgue un dispositif de contrôle de la désolidarisation entre une grappe de contrôle et la tige de commande comprenant une tige de palpation.

Un objectif de l'invention est de proposer un ensemble de contrôle qui permette de s'assurer de façon simple que lors des opérations de maintenance, la tige de commande est bien désolidarisée de la tête de la grappe de contrôle pour éviter une remontée inopinée de la grappe de contrôle voire d'un élément combustible. Il est de plus souhaitable que le contrôle de la déconnexion puisse être effectué rapidement lors de la remontée de la tige de commande pour permettre une réinsertion facile de la grappe de contrôle dans l'élément combustible.

A cette fin, l'invention concerne un ensemble de contrôle dans un réacteur nucléaire selon la revendication 1.

Ainsi, en observant le déplacement relatif de la tige de palpation par rapport à la tige de commande lors du retrait des internes supérieurs, il est possible déterminer si la désolidarisation de la tige de commande de la tête de la grappe de contrôle est bien effective. En effet, un déplacement relatif sensiblement nul signifie que la grappe de contrôle, voire l'élément combustible, et la tige de commande remontent simultanément et que le dispositif de fixation n'est pas déconnecté de la tête de la grappe de contrôle. Au contraire, un déplacement relatif non nul de la tige de palpation par rapport à la tige de commande, se traduisant par un « effacement » de la tige de palpation dans la tige de commande, signifie que le dispositif de fixation de la tige de commande est bien désolidarisé de la tête de la grappe de contrôle et que l'élément combustible n'est pas resté accroché à un élément interne supérieur, et ainsi que la tige de commande peut être remontée en toute sécurité.

Selon des modes spécifiques de réalisation de l'invention, le dispositif de contrôle de la réactivité comprend une ou plusieurs des caractéristiques mentionnées Dans les revendications dépendantes 2 à 6.

L'invention concerne également selon un deuxième aspect un procédé de contrôle de la désolidarisation d'une tige de commande d'une grappe de contrôle d'un dispositif de contrôle de la réactivité en utilisant un ensemble de contrôle tel que décrit ci-dessus, le procédé étant selon la revendication 7.

Selon des modes de réalisation avantageux, le procédé comprend une ou plusieurs des caractéristiques des revendications 8 à 10.

D'autres caractéristiques et avantages de l'invention seront apparents à partir de la description détaillée ci-dessous qui est donnée juste à titre indicatif et non limitatif avec référence aux figures ci-jointes parmi lesquelles :
- la figure 1 est une vue en coupe axiale partielle d'un ensemble de contrôle selon l'invention dans laquelle le dispositif de fixation est dans une position de connexion, la tige de palpation dépassant de l'extrémité supérieure de la tige de commande,
- la figure 2 est une vue en coupe axiale partielle de l'ensemble de contrôle de la figure 1 dans laquelle le dispositif de fixation est dans une position de déconnexion, la tige de commande étant partiellement remontée, la tige de palpation étant effacée mais étant toujours, en partie basse, en appui sur la tête de grappe de contrôle,
- la figure 3 est une vue en coupe axiale partielle de l'ensemble de la figure 1 dans laquelle le dispositif de fixation est dans une position de déconnexion, la tige de commande étant remontée, et la tige de palpation étant effacée dans la tige de commande,

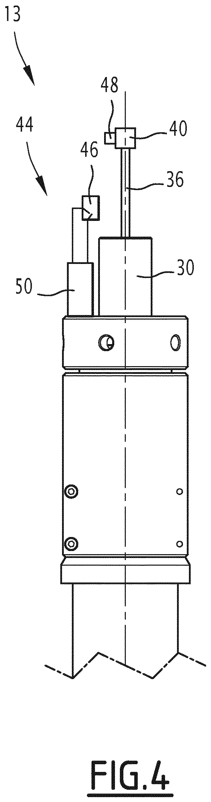

- la figure 4 est une vue en coupe axiale schématique de la partie supérieure de la tige de commande et d'un premier système de contrôle du déplacement relatif de la tige de palpation par rapport à la tige de commande,

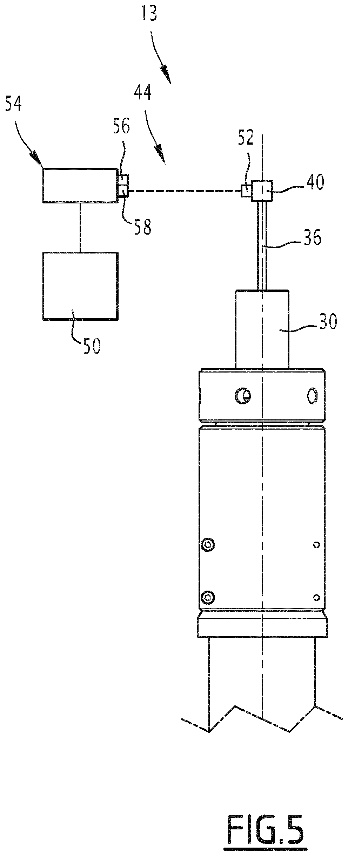

- la figure 5 est une vue en coupe axiale schématique de la partie supérieure de la tige de commande et d'un deuxième système de contrôle du déplacement relatif de la tige de palpation par rapport à la tige de commande.

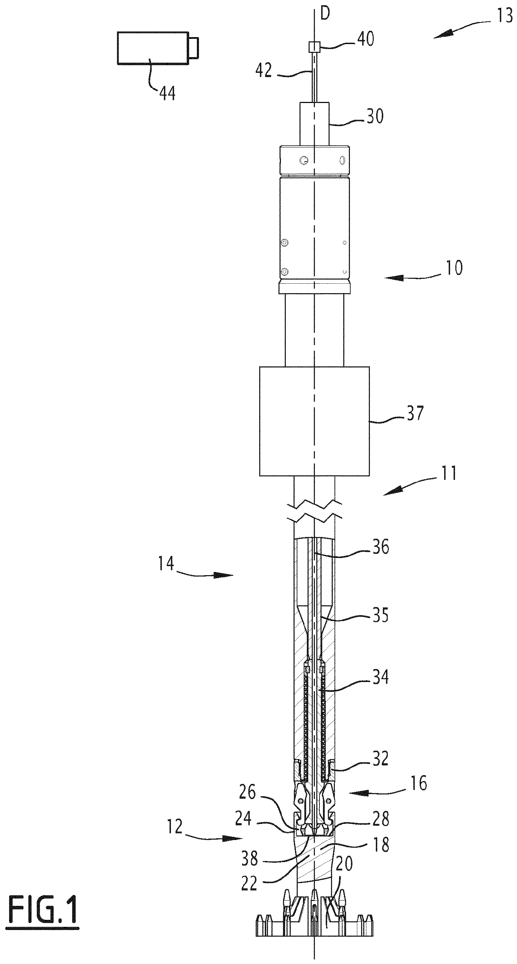

Les figures 1 à 3 présentent un ensemble de contrôle 10 pour un réacteur nucléaire (non représenté) selon l'invention.

Dans l'ensemble de la description, les termes « haut(e) », « bas(se) », « inférieur(e) » et « supérieur(e) » sont relatifs à la direction axiale D du dispositif de contrôle de la réactivité 11. La direction axiale D est sensiblement confondue avec la direction verticale.

Le réacteur nucléaire est par exemple un réacteur nucléaire à eau sous pression (REP ou en anglais PWR ou « Pressurized Water Reactor »).

De manière connue, dans ce type de réacteur, une réaction nucléaire se produit dans le coeur (non représenté) du réacteur et dégage une chaleur importante qui est transférée à l'eau d'un circuit primaire (non représenté) maintenue à haute pression et à haute température (environ 300°C). L'eau du circuit primaire transmet sa chaleur à celle d'un circuit secondaire (non représenté) et la transforme en vapeur au niveau d'un générateur de vapeur (non représenté). La vapeur est ensuite utilisée, par exemple, pour faire tourner un groupe turbo-alternateur qui produit de l'électricité.

Par exemple, le réacteur est un réacteur modulaire de faible puissance (SMR pour « Small Modular Reactor » en langue anglaise) dont la puissance est typiquement inférieure à 300 MWe.

En variante, le réacteur est un réacteur présentant une puissance supérieure à 300 MWe.

En variante ou en complément, le réacteur est du type intégré. Dans ce type de réacteur, le générateur de vapeur est intégré dans la cuve.

Le réacteur comprend une cuve et un coeur comportant une pluralité d'éléments combustibles nucléaires (non représentés) juxtaposés dans la cuve du réacteur.

Chaque élément combustible nucléaire comprend un faisceau de crayons de combustible insérés dans une structure porteuse comportant des tubes-guides.

Le réacteur comprend en outre au moins un ensemble de contrôle 10 selon l'invention.

L'ensemble de contrôle 10 comprend un dispositif de contrôle 11 de la réactivité pour contrôler la réactivité du coeur du réacteur et un dispositif de contrôle 13 de la désolidarisation entre la grappe de contrôle 12 et la tige de commande 14 du dispositif de contrôle 11 de la réactivité.

De préférence, les éléments du dispositif de contrôle 13 de la désolidarisation entre la grappe de contrôle 12 et la tige de commande 14 forment un outillage rapporté sur le dispositif de contrôle 11 de la réactivité installé lors des opérations de retrait des internes supérieurs de la cuve ou la désolidarisation des tiges 14 et grappes 12.

Dit autrement, le dispositif de contrôle 13 et ses éléments sont amovibles et peuvent être placés ou retirés du dispositif de contrôle 11 de la réactivité par un ou plusieurs opérateurs lors des opérations de maintenance.

Chaque dispositif de contrôle 11 comprend une grappe de contrôle 12 s'étendant selon une direction axiale D, une tige de commande 14 fixée de manière amovible à la grappe de contrôle 12 au moyen d'un dispositif de fixation 16, et un mécanisme d'entrainement 37 en translation selon la direction axiale D de la tige de commande 14 en montée ou en descente pour descendre ou remonter la grappe de contrôle 14 dans l'élément combustible et contrôler la réactivité du coeur.

Dans l'exemple des figures 1 à 3, le mécanisme d'entrainement 37 est situé à l'intérieur de la cuve.

En variante, le mécanisme d'entrainement 37 est situé au-dessus du couvercle de la cuve du réacteur.

Le mécanisme 37 est actionné automatiquement ou manuellement par un opérateur, par exemple depuis une salle de commande.

La perte de tension dans un des circuits de commande du mécanisme d'entrainement 37 entraine la chute de la grappe de contrôle 12 par gravité et entraine ainsi un arrêt rapide du réacteur.

Le mécanisme d'entrainement 37 est par exemple un mécanisme pas à pas comprenant une commande électromagnétique, un dispositif à pignons et crémaillère, ou un mécanisme à vis-écrou avec vis largable en cas de coupure de courant.

La grappe de contrôle 12 comprend une extrémité supérieure 18 comportant un support 20 encore appelé « araignée » et une pluralité de crayons absorbants (non représentés) fixés au support 20.

Le support 20 comprend une tête de fixation 22 coopérant mécaniquement avec la tige de commande 14 et plus particulièrement avec le dispositif de fixation 16.

Chaque crayon absorbant s'étend selon une direction sensiblement parallèle à la direction axiale D.

Par exemple, la grappe de contrôle 12 comprend entre huit et trente-six crayons absorbants, par exemple vingt-quatre crayons absorbants.

Chaque crayon absorbant est par exemple fait d'un alliage argent-indium-cadmium, ou de carbure de bore ou d'acier inoxydable.

De préférence, le support 20 comprend une douille 24 définissant une ouverture et un volume de réception 26 recevant le dispositif de fixation 16 de la tige de commande 14.

Le volume de réception 26 comprend une surface inférieure 28, de préférence sensiblement plane, à l'opposé de l'ouverture.

La tige de commande 14 s'étend selon la direction axiale D.

La tige de commande 14 comprend une extrémité supérieure 30 et une extrémité inférieure 32 située à l'opposé de l'extrémité supérieure 30 selon la direction axiale D.

L'extrémité inférieure 32 comprend le dispositif de fixation 16 pour fixer la tige de commande 14 à la tête de fixation 22 de la grappe de contrôle 12.

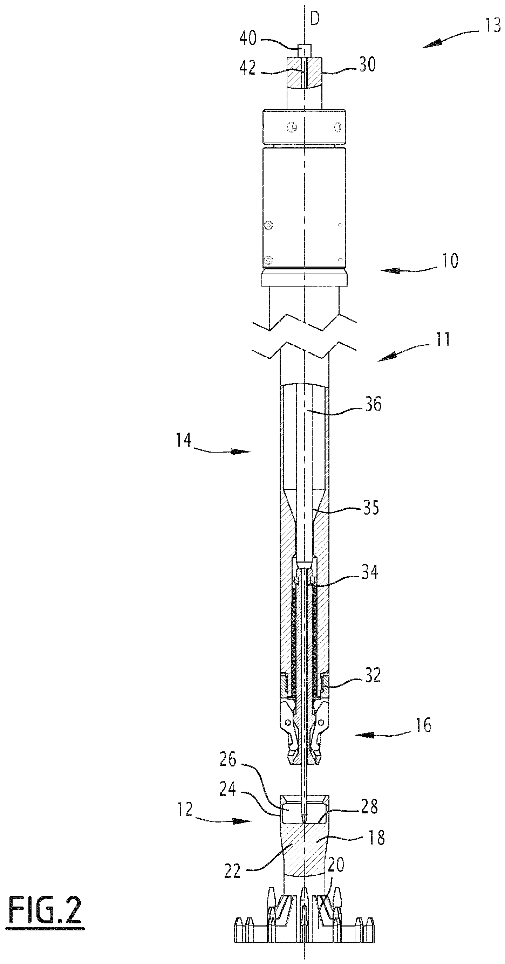

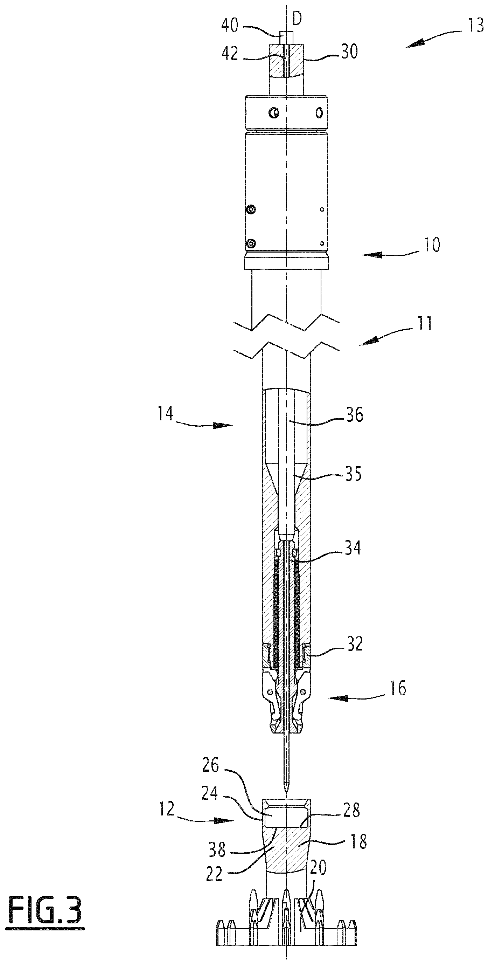

Le dispositif de fixation 16 est déplaçable entre une position de connexion (figure 1) dans laquelle la tige de commande 14 est solidarisée à la tête de fixation 22 de la grappe de contrôle 12, et une position de déconnexion (figures 2 et 3) dans laquelle la tige de commande 14 est désolidarisée de la tête de fixation 22 de la grappe de contrôle 12.

En fonctionnement normal du réacteur, le dispositif de fixation 16 est dans la position de connexion de sorte qu'un déplacement selon la direction axiale D de la tige de commande 14 par le mécanisme d'entrainement 37 entraine le déplacement de la grappe de contrôle 12 et par suite des crayons absorbants.

Lors d'opérations de maintenance par exemple, il peut être nécessaire de remonter la tige de commande 14 indépendamment de la grappe de contrôle 12, notamment pour retirer les équipements internes supérieurs.

Les équipements internes supérieurs sont les équipements disposés à l'intérieur de la cuve du réacteur servant au support et au guidage des éléments combustibles, des grappes de contrôle 12 et de l'instrumentation.

Le dispositif de fixation 16 est alors placé dans la position de déconnexion de sorte que le déplacement de la tige de commande 14 n'entraine pas, lorsque l'opération de retrait des internes supérieurs se passe correctement, le déplacement de la grappe de contrôle 12 de manière simultanée. En d'autres termes, dans la position de déconnexion, la tige de commande 14 peut se déplacer indépendamment de la grappe de contrôle 12.

Le dispositif de fixation 16 est par exemple un dispositif de fixation par linguets connu de l'état de la technique.

En variante, le dispositif de fixation 16 est de tout type.

Selon l'invention, la tige de commande 14 et le dispositif de fixation 16 définissent un logement axial 34 traversant formant un fourreau 35. Autrement dit, le fourreau 35 débouche dans l'extrémité supérieure 30 de la tige de commande 14 et traverse le dispositif de fixation 16 et s'ouvre vers l'extérieur sous le dispositif de fixation 16.

Le dispositif de contrôle 13 de la désolidarisation entre la grappe de contrôle 12 et la tige de commande 14 comprend une tige de palpation 36 reçue dans le fourreau 35 et montée libre en translation selon la direction axiale D dans le fourreau 35.

Par exemple, le diamètre de la tige de palpation 36 est compris entre 2 mm et 10 mm.

Par exemple, la longueur de la tige de palpation 36, mesurée selon la direction axiale D, dépasse de la longueur de la tige de commande 14 d'une longueur de 5 cm à 15 cm.

La tige de palpation 36 est de préférence métallique, par exemple en acier inoxydable.

La tige de palpation 36 comprend une extrémité inférieure 38 et une extrémité supérieure 40 à l'opposé de l'extrémité inférieure 38.

L'extrémité inférieure 38 est en butée sur la tête de fixation 22 de la grappe de contrôle 12 et plus particulièrement en butée contre la surface inférieure 28 du volume de réception 26 de la tête de fixation 22 de la grappe de contrôle 12. L'extrémité inférieure 38 passe donc par l'ouverture inférieure du fourreau 35 débouchant vers l'extérieur sous le dispositif de fixation 16.

Plus particulièrement, l'extrémité inférieure 38 est en butée contre la surface inférieure 28 du volume de réception 26 de la douille 24 de la grappe de contrôle 20.

De préférence, la longueur de la tige de palpation 36 est dimensionnée de sorte que dans la position de connexion, l'extrémité supérieure 40 de la tige de palpation 36 dépasse de l'extrémité supérieure 30 de la tige de commande 14, en dehors du fourreau 35, d'une hauteur comprise entre 5 cm et 15 cm, par exemple 7,2 cm.

Dit autrement, de préférence, la tige de palpation 36 présente une longueur axiale supérieure à la longueur axiale du fourreau 35.

Ainsi, en observant le déplacement relatif de l'extrémité supérieure 40 de la tige de palpation 36 par rapport à l'extrémité supérieure 30 de la tige de commande 14, il est possible de déterminer si la désolidarisation de la tige de commande 14 de la tête de fixation 22 de la grappe de contrôle 12 est bien effective. En effet, un déplacement relatif sensiblement nul signifie que la grappe de contrôle 12 et la tige de commande 14 remontent simultanément. Au contraire, un déplacement relatif non nul de l'extrémité supérieure 40 de la tige de palpation 36 par rapport à l'extrémité supérieure 30 de la tige de commande 14, se traduisant par un « effacement » de la tige de palpation 36 à l'intérieur du fourreau 35, signifie que le dispositif de fixation 16 de la tige de commande 14 est désolidarisé de la tête de fixation 22 la grappe de contrôle 12 (figures 2 et 3).

De même si l'élément combustible était emporté lors du retrait de la tige de commande 14, la grappe serait entrainée avec lui et le déplacement relatif de la tige de palpation serait sensiblement nul. Cet évènement serait donc également identifié.

Avantageusement, la paroi extérieure 42 de la tige de palpation 36 est graduée ou comporte au moins une marque. Ceci permet à l'opérateur de contrôler plus facilement visuellement le déplacement relatif de l'extrémité supérieure 40 de la tige de palpation 36 par rapport à l'extrémité supérieure 30 de la tige de commande 14.

En variante ou en complément, le dispositif de contrôle 13 comprend en outre un système de contrôle 44 du déplacement relatif de la tige de palpation 36 par rapport à la tige de commande 14, et plus particulièrement de l'extrémité supérieure 40 de la tige de palpation 36 par rapport à l'extrémité supérieure 30 de la tige de commande 14.

Par exemple, le système de contrôle 44 comprend un interrupteur magnétique 46 fixé de préférence sur l'extrémité supérieure 40 de la tige de commande 14 et un aimant 48 fixé sur la tige de palpation 36.

L'interrupteur magnétique 46 est par exemple un interrupteur à lames souples 46 ou interrupteur REED comprenant deux contacts magnétisés qui, en présence d'un champ magnétique s'aimantent par influence, sont attirés l'un par l'autre, se touchent et établissent un contact électrique. A l'inverse, lorsque le champ magnétique cesse, l'aimantation entre les deux contacts cesse et les deux contacts s'écartent l'un par rapport à l'autre.

L'interrupteur magnétique 46 est ainsi configuré pour se déplacer d'une position ouverte vers une position fermée en présence d'un champ magnétique, et de la position fermée vers la position ouverte en l'absence du champ magnétique.

Ainsi, le passage de l'aimant 48 devant l'interrupteur magnétique 46 entraine la fermeture de l'interrupteur 46 permettant la détection du déplacement de la tige de palpation 36 par rapport à la tige de commande 14.

L'interrupteur 46 est par exemple connecté à un dispositif de signalisation 50 configuré pour alerter un opérateur de la fermeture de l'interrupteur 46.

En variante, le système de contrôle 44 comprend une cible 52 réfléchissante fixée sur la tige de palpation 36, de préférence à l'extrémité 40 de la tige de palpation 36, et un dispositif optique 54 comportant une caméra vidéo 56 couplée à une source lumineuse 58, disposé à distance de la tige de palpation 36.

Le dispositif optique 54 est configuré pour se déplacer en translation selon la direction D simultanément avec la tige de commande 14, lors du retrait de la tige de commande 14.

La source lumineuse 58 est par exemple une source laser.

La source lumineuse 58 est configurée pour émettre un rayon lumineux vers la cible réfléchissante 52.

La caméra vidéo 56 est configurée pour détecter le rayon lumineux réfléchi sur la cible réfléchissante 52.

L'absence de détection de rayon lumineux réfléchi indique un déplacement relatif de la tige de palpation 36 par rapport à la tige de commande 14.

La caméra vidéo 56 est par exemple connectée à un dispositif de signalisation 50 configuré pour alerter un opérateur en l'absence de rayon lumineux réfléchi.

Un procédé de contrôle de la désolidarisation d'une tige de commande 14 d'une grappe de contrôle 12 d'un dispositif de contrôle de la réactivité 11 selon l'invention tel que décrit plus haut, va maintenant être décrit.

Le procédé comprend tout d'abord une étape de déconnexion de la tige de commande 14 de la tête de fixation 22 de la grappe de contrôle 12.

Durant cette étape, le dispositif de fixation 16 est déplacé de la position de connexion vers la position de déconnexion.

Durant l'étape suivante, les internes supérieurs portant la(les) tige(s) de commande 14 sont remontés vers le haut selon la direction axiale D.

La tige de commande 14 est remontée vers le haut selon la direction axiale D.

Le procédé comprend alors le contrôle du déplacement relatif de la tige de palpation 36 par rapport à la tige de commande 14.

De préférence, cette étape comprend le contrôle du déplacement relatif de l'extrémité supérieure 40 de la tige de palpation 36 par rapport à l'extrémité supérieure 30 de la tige de commande 14.

Le contrôle s'effectue par exemple visuellement par un opérateur ou automatiquement en utilisant un système de contrôle du déplacement 44.

Le procédé comprend ensuite l'arrêt de la remontée de la tige de commande 14 si le déplacement relatif est sensiblement nul.

En effet, un déplacement relatif sensiblement nul entre la tige de palpation 36 et la tige de commande 14 signifie que la tige de commande 14 entraîne, dans sa remontée, la remontée de la grappe de contrôle 12 consécutive à une mauvaise déconnexion du dispositif de fixation 16.

A l'inverse, un déplacement relatif non nul entre la tige de palpation 36 et la tige de commande 14 signifie que la tige de commande 14 est bien déconnectée de la grappe de contrôle 12. Plus particulièrement, au niveau de l'extrémité supérieure 30 de la tige de commande 14, la tige de palpation 36 semble « s'effacer » dans la tige de commande 14.

Dit autrement, la distance entre l'extrémité supérieure 40 de la tige de palpation 36 et l'extrémité supérieure 30 de la tige de commande 14 diminue au cours de la remontée de la tige de commande 14 lorsque le dispositif de fixation 16 est correctement déconnecté de la grappe de contrôle 12.

De préférence, le procédé comprend une étape consistant à remonter la tige de commande 14 d'une hauteur prédéterminée avant d'effectuer le contrôle du déplacement relatif entre la tige de palpation 36 et la tige de commande 14.

La hauteur prédéterminée est comprise entre 5 cm et 15 cm, par exemple 7,2 cm.

De préférence, la hauteur prédéterminée est choisie de manière à ce qu'en cas de mauvaise déconnexion du dispositif de fixation 16 avec la grappe de contrôle 12, la tige de commande 14 puisse être redescendue dans l'élément combustible et que les crayons d'absorbants puissent être repositionnés dans la géométrie du coeur, et avant que la grappe de contrôle 12 ait l'occasion de faire des dommages.

Ainsi, l'ensemble de contrôle 10 selon l'invention est particulièrement avantageux car il permet de s'assurer que la déconnexion entre le dispositif de fixation 16 et la tête de fixation 22 de la grappe de contrôle 12 est bien effective, empêchant une remontée inopinée de la grappe de contrôle 12 et potentiellement d'un élément combustible qui s'accrocherait à la grappe de contrôle 12 ou à un élément interne supérieur.

## Revendications

1. Ensemble de contrôle (10) pour réacteur nucléaire, l'ensemble comprenant :
- un dispositif de contrôle de la réactivité (11) comprenant une grappe de contrôle (12) s'étendant selon une direction axiale (D) comprenant une extrémité supérieure (18) comportant une tête de fixation (22), une tige de commande (14) s'étendant selon la direction axiale (D), la tige de commande (14) comprenant une extrémité supérieure (30) et une extrémité inférieure (32) située à l'opposé de l'extrémité supérieure (30), l'extrémité inférieure (32) comportant un dispositif de fixation (16) pour fixer la tige de commande (14) à la tête de fixation (22) de la grappe de contrôle (12), le dispositif de fixation (16) étant déplaçable entre une position de connexion dans laquelle la tige de commande (14) est solidarisée à la tête de fixation (22) de la grappe de contrôle (12), et une position de déconnexion dans laquelle la tige de commande (14) est désolidarisée de la tête de fixation (22) de la grappe de contrôle (12),
- un dispositif de contrôle (13) de la désolidarisation entre la grappe de contrôle (12) et la tige de commande (14), coopérant avec le dispositif de contrôle de la réactivité (11) au moins lors d'une opération de maintenance, le dispositif de contrôle (13) comprenant une tige de palpation (36),
**caractérisé en ce que** la tige de commande (14) et le dispositif de fixation (16) définissant un logement axial (34) traversant formant un fourreau (35), la tige de palpation (36) étant reçue dans le fourreau (35) et montée libre en translation selon la direction axiale (D) dans le fourreau (35), la tige de palpation (36) comprenant une extrémité supérieure (40) et une extrémité inférieure (38) située à l'opposé de l'extrémité supérieure (40), l'extrémité inférieure (38) de la tige de palpation (36) étant en butée sur la tête de fixation (22) de la grappe de contrôle (12).

2. Ensemble de contrôle selon la revendication 1, dans lequel la longueur selon la direction axiale (D) de la tige de palpation (36) est supérieure à la longueur selon la direction axiale (D) de la tige de commande (14) de sorte que dans la position de connexion, l'extrémité supérieure (40) de la tige de palpation (36) dépasse de l'extrémité supérieure (30) de la tige de commande (14).

3. Ensemble de contrôle selon la revendication 1 ou 2, dans lequel le dispositif de contrôle (13) de la désolidarisation entre la grappe de contrôle (12) et la tige de commande (14) comprend en outre un système de contrôle du déplacement relatif (44) de la tige de palpation (36) par rapport à la tige de commande (14), de préférence du déplacement relatif de l'extrémité supérieure (40) de la tige de palpation (36) par rapport à l'extrémité supérieure (30) de la tige de commande (14).

4. Ensemble de contrôle (10) selon la revendication 3, dans lequel le système de contrôle du déplacement relatif (44) comprend un aimant (48) fixé sur la tige de palpation (36) et un interrupteur magnétique (46) configuré pour se déplacer d'une position ouverte vers une position fermée en présence d'un champ magnétique généré par l'aimant (48).

5. Ensemble de contrôle (10) selon la revendication 3, dans lequel le système de contrôle du déplacement relatif (44) comprend une cible réfléchissante (48) fixée sur la tige de palpation (36), un système optique (54) comprenant une caméra vidéo (56) et une source lumineuse (58), le système optique (54) étant configuré pour se déplacer simultanément avec la tige de commande (14), la source lumineuse (58) étant configurée pour émettre un signal vidéo vers la cible réfléchissante (48), la caméra vidéo étant configurée pour détecter le signal lumineux réfléchi sur ladite cible réfléchissante (58).

6. Ensemble de contrôle (10) selon l'une quelconque des revendications 1 à 5, dans lequel la tige de palpation (36) est graduée.

7. Procédé de contrôle de la désolidarisation d'une tige de commande (14) d'une grappe de contrôle (12) d'un dispositif de contrôle de la réactivité (11) en utilisant un ensemble de contrôle (10) selon l'une quelconque des revendications 1 à 6, le procédé comprenant :
- déconnecter la tige de commande (14) de la tête de fixation (22) de la grappe de contrôle (12),
- remonter la tige de commande (14) selon la direction axiale (D),
- contrôler le déplacement relatif de la tige de palpation (36) par rapport à la tige de commande (14),
- stopper la remontée de la tige de commande (14) si le déplacement relatif est sensiblement nul.

8. Procédé selon la revendication 7, dans lequel la tige de commande (14) est remontée d'une hauteur prédéterminée comprise entre 5 et 15 cm avant de contrôler le déplacement relatif de la tige de palpation (36) par rapport à la tige de commande (14).

9. Procédé de contrôle selon la revendication 7 ou 8, dans lequel l'étape de contrôle comprend le contrôle visuel du déplacement relatif de la tige de palpation (36) par un opérateur ou automatiquement en utilisant un système de contrôle (44).

10. Procédé selon la revendication 7 ou 8, dans lequel l'étape de contrôle comprend de contrôler le déplacement relatif de l'extrémité supérieure (40) de la tige de palpation (36) par rapport à l'extrémité supérieure (30) de la tige de commande (14).

## Patentansprüche

1. Steueranordnung (10) für Kernreaktor, die Anordnung umfassend:
- eine Steuervorrichtung der Reaktivität (11), umfassend einen Steuercluster (12), der sich in einer axialen Richtung (D) erstreckt, umfassend ein oberes Ende (18) umfassend einen Befestigungskopf (22), eine Treibstange (14), die sich in der axialen Richtung (D) erstreckt, die Treibstange (14) umfassend ein oberes Ende (30) und ein unteres Ende (32), das sich gegenüber dem oberen Ende (30) befindet, das untere Ende (32) umfassend eine Befestigungsvorrichtung (16) zum Befestigen der Treibstange (14) an dem Befestigungskopf (22) des Steuerclusters (12), wobei die Befestigungsvorrichtung (16) zwischen einer Verbindungsposition, in der die Treibstange (14) fest mit dem Befestigungskopf (22) des Steuerclusters (12) verbunden ist, und einer Trennposition, in der die Treibstange (14) von dem Befestigungskopf (22) des Steuerclusters (12) gelöst ist, verschiebbar ist,
- eine Steuervorrichtung (13) der Trennung zwischen dem Steuercluster (12) und der Treibstange (14), die zumindest während eines Wartungsvorgangs mit der Steuervorrichtung der Reaktivität (11) zusammenwirkt, die Steuervorrichtung (13) umfassend eine Fühlerstange (36),
**dadurch gekennzeichnet, dass** die Treibstange (14) und die Befestigungsvorrichtung (16) eine durchgehende axiale Aufnahme (34) definieren, die eine Hülse (35) bildet, wobei die Fühlerstange (36) in der Hülse (35) aufgenommen und in der axialen Richtung (D) in der Hülse (35) frei translatorisch montiert ist, die Fühlerstange (36) umfassend ein oberes Ende (40) und ein unteres Ende (38), das sich gegenüber dem oberen Ende (40) befindet, wobei das untere Ende (38) der Fühlerstange (36) an dem Befestigungskopf (22) des Steuerclusters (12) anliegt.

2. Steueranordnung nach Anspruch 1, wobei die Länge in axialer Richtung (D) der Fühlerstange (36) größer ist als die Länge entlang der axialen Richtung (D) der Steuerstange (14) ist, sodass das obere Ende (40) der Fühlerstange (36) in der Verbindungsposition über das obere Ende (30) der Steuerstange (14) hervorsteht.

3. Steueranordnung nach Anspruch 1 oder 2, wobei die Steuervorrichtung (13) der Trennung zwischen dem Steuercluster (12) und der Steuerstange (14) ferner ein Steuersystem der relativen Bewegung (44) der Fühlerstange (36) in Bezug auf die Steuerstange (14) umfasst, vorzugsweise der relativen Bewegung des oberen Endes (40) der Fühlerstange (36) in Bezug auf das obere Ende (30) der Steuerstange (14).

4. Steueranordnung (10) nach Anspruch 3, wobei das Steuersystem der relativen Bewegung (44) einen an der Fühlerstange (36) befestigten Magneten (48) und einen Magnetschalter (46) umfasst, der konfiguriert ist, um in Anwesenheit eines von dem Magneten (48) erzeugten Magnetfelds von einer offenen Position in eine geschlossene Position zu bewegen.

5. Steueranordnung (10) nach Anspruch 3, wobei das Steuersystem der relativen Bewegung (44) ein reflektierendes Ziel (48), das an der Fühlerstange (36) befestigt ist, ein optisches System (54) umfassend eine Videokamera (56) und eine Lichtquelle (58) umfasst, wobei das optische System (54) konfiguriert ist, um sich gleichzeitig mit der Fühlerstange (14) zu bewegen, wobei die Lichtquelle (58) konfiguriert ist, um ein Videosignal in Richtung des reflektierenden Ziels (48) zu emittieren, wobei die Videokamera konfiguriert ist, um das an dem reflektierenden Ziel (58) reflektierte Lichtsignal zu erfassen.

6. Steueranordnung (10) nach einem der Ansprüche 1 bis 5, wobei die Fühlerstange (36) skaliert ist.

7. Steuerverfahren der Trennung einer Treibstange (14) von einem Steuercluster (12) einer Steuervorrichtung der Reaktivität (11) unter Verwendung einer Steueranordnung (10) nach einem der Ansprüche 1 bis 6, das Verfahren umfassend:
- Trennen der Treibstange (14) von dem Befestigungskopf (22) des Steuerclusters (12),
- Anheben der Treibstange (14) in axialer Richtung (D),
- Steuern der relativen Bewegung der Fühlerstange (36) in Bezug auf die Treibstange (14),
- Anhalten des Anhebens der Treibstange (14), wenn die relative Bewegung im Wesentlichen null ist.

8. Verfahren nach Anspruch 7, wobei die Treibstange (14) um eine vorbestimmte Höhe zwischen 5 und 15 cm angehoben wird, bevor die relative Bewegung der Fühlerstange (36) in Bezug auf die Treibstange (14) gesteuert wird.

9. Steuerverfahren nach Anspruch 7 oder 8, wobei der Steuerschritt die visuelle Kontrolle der relativen Bewegung der Fühlerstange (36) durch einen Bediener oder automatisch unter Verwendung eines Kontrollsystems (44) umfasst.

10. Verfahren nach Anspruch 7 oder 8, wobei der Schritt des Überwachens das Überwachen der relativen Bewegung des oberen Endes (40) der Fühlerstange (36) in Bezug auf das obere Ende (30) der Steuerstange (14) umfasst.

## Claims

1. A control assembly (10) for a nuclear reactor, the control assembly comprising:
- a reactivity control device (11) comprising a control rod cluster (12) extending along an axial direction (D) comprising an upper end (18) which includes an attachment head (22), a drive rod (14) extending along the axial direction (D), the drive rod (14) comprising an upper end (30) and a lower end (32) located opposite the upper end (30), the lower end (32) including an attachment device (16) for attaching the drive rod (14) to the attachment head (22) of the control rod cluster (12), the attachment device (16) being movable between a connection position wherein the drive rod (14) is rigidly attached to the attachment head (22) of the control rod cluster (12), and a disconnection position wherein the drive rod (14) is separated from the attachment head (22) of the control rod cluster (12),
- a checking device (13) for checking the separation between the control rod cluster (12) and the drive rod (14), mating with the reactivity control device (11) at least during a maintenance operation, the checking device (13) comprising a probe rod (36),
**characterized in that** the drive rod (14) and the attachment device (16) defining a through axial housing (34) forming a sleeve (35), the probe rod (36) being received inside the sleeve (35) and mounted free in translation along the axial direction (D) in the sleeve (35), the probe rod (36) comprising an upper end (40) and a lower end (38) located opposite the upper end (40), the lower end (38) of the probe rod (36) abutting against the attachment head (22) of the control rod cluster (12).

2. The control assembly according to claim 1, wherein the length according to the axial direction (D) of the probe rod (36) is greater than the length according to the axial direction (D) of the drive rod (14) so that in the connection position, the upper end (40) of the probe rod (36) protrudes from the upper end (30) of the drive rod (14).

3. The control assembly according to claim 1 or 2, wherein the checking device (13) further comprises a checking system for checking the relative displacement (44) of the probe rod (36) with respect to the drive rod (14), preferentially the relative displacement of the upper end (40) of the probe rod (36) with respect to the upper end (30) of the drive rod (14).

4. The control assembly (10) according to claim 3, wherein the checking system (44) comprises a magnet (48) attached to the probe rod (36) and a magnetic switch (46) configured to move from an open position to a closed position in the presence of a magnetic field generated by the magnet (48).

5. The control assembly (10) according to claim 3, wherein the checking system (44) comprises a reflective target (48) attached to the probe rod (36), an optical system (54) comprising a video camera (56) and a light source (58), the optical system (54) being configured for moving simultaneously with the drive rod (14), the light source (58) being configured for transmitting a video signal to the reflective target (48), and the video camera being configured for detecting the light signal reflected onto the reflective target (58).

6. The control assembly (10) according to any of claims 1 to 5, wherein the probe rod (36) is graduated.

7. A method for controlling the separation of a drive rod (14) from a control rod cluster (12) of a reactivity control device (11) using the control assembly (10) according to any of claims 1 to 6, the method comprising:
- disconnecting the drive rod (14) from the attachment head (22) of the control rod cluster (12),
- raising up the drive rod (14) along the axial direction (D),
- checking the relative displacement of the probe rod (36) with respect to the drive rod (14),
- stopping the raising of the drive rod (14) if the relative displacement is substantially equal to zero.

8. The method according to claim 7, wherein the drive rod (14) is raised by a predetermined height comprised between 5 and 15 cm prior to checking the relative displacement of the probe rod (36) with respect to the drive rod (14).

9. The control method according to claim 7 or 8, wherein the checking step comprises a visual check of the relative displacement of the probe rod (36) by an operator or an automatic check using a checking system (44).

10. The method according to claim 7 or 8, wherein the checking step comprises checking the relative displacement of the upper end (40) of the probe rod (36) with respect to the upper end (30) of the drive rod (14).
